# EUROPEAN PATENT APPLICATION

(11) **EP 2 151 786 A2**
(43) Date of publication of application: **10.02.2010**
(21) Application number: 09007228.1
(22) Date of filing: 29.05.2009
(51) Int. Cl.: G06K 9/00, G06K 9/62, G06F 21/00

(54) **Identification method control device and identification method control method**

(30) Priority: 06.08.2008 JP 2008203275
(71) Applicant: Fujitsu Limited, Kawasaki-shi, Kanagawa 211-8588 (JP)
(72) Inventor: Takagi, Junji, Kawasaki-shi, Kanagawa 211-8588 (JP)
(74) Representative: HOFFMANN EITLE

(57) **Abstract**

An identification method control device includes a trend extraction unit that extracts a trend of a plurality of match information between a biometric data of an individual input by a biometric information input unit and a reference data of the individual stored in a storage unit, and an identification method control unit that changes an identification method with respect to the individual based on an extraction result of the trend extraction unit.

## Description

### FIELD

The present invention relates to an identification method control device and an identification method control method using biometrics.

### BACKGROUND

There is a case where biometrics is used in an identification system identifying an individual. The biometrics is a technology for identifying an individual with biological feature such as fingerprint that is unique to the individual. However, there is a case where the technology fails to identify the individual because of drying of finger or wound of finger.

Japanese Patent Application Publication No. 2001-167053 (hereinafter referred to as Document 1) discloses a technology using an alternative identification method such as password is used when an individual is not identified and quality of reference data is more than certain level.

However, password identification may be selected permanently with respect to a specific individual, with the technology disclosed in Document 1. In this case, it may not be possible to maintain toughness of security. On the other hand, the technology may cause degradation of convenience of an individual that fails to be identified many times, if the password identification is not allowed.

### SUMMARY

The present invention has been made in view of those circumstances, and an object thereof is to restrain degradation of convenience and maintain security toughness.

According to an aspect of the present invention, there is provided an identification method control device including a trend extraction unit that extracts a trend of a plurality of match information between a biometric data of an individual input by a biometric information input unit and a reference data of the individual stored in a storage unit, and an identification method control unit that changes an identification method with respect to the individual based on an extraction result of the trend extraction unit.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWING

FIG. 1A illustrates a schematic view of an identification system including an identification method control device in accordance with a first embodiment;
FIG. 1B illustrates a block diagram of an identification system;
FIG. 2 illustrates a block diagram of an identification system;
FIG. 3 illustrates identification information;
FIG. 4 illustrates user information and biometric user information;
FIG. 5 illustrates match determination result;
FIG. 6 illustrates an example of a success rate average of matching according to time;
FIG. 7 illustrates identification method change information;
FIG. 8A illustrates an example of extracted log information;
FIG. 8B illustrates an example of calculation result by a trend extraction unit;
FIG. 9 illustrates an example of updated biometrics user information;
FIG. 10A and FIG. 10B illustrate an example of flowchart executed by an identification method control device when a match unit fails matching;
FIG. 11 illustrates an example where an identification method control device and a fingerprint identification server are coupled to a plurality of client terminals;
FIG. 12 illustrates an example of an extraction result;
FIG. 13 illustrates a block diagram of an identification system in accordance with a second embodiment;
FIG. 14 illustrates a temporary action;
FIG. 15 illustrates updated user information and biometrics user information;
FIG. 16 illustrates user information in a case where password is set;
FIG 17A and FIG. 17B illustrate an example of a flowchart executed by an identification method control device when a match unit fails matching; and
FIG. 18 illustrates an identification method control device and a fingerprint identification server.

### DESCRIPTION OF EMBODIMENTS

The following is a description of embodiments of the present invention, with reference to the accompanying drawings.

### [First Embodiment]

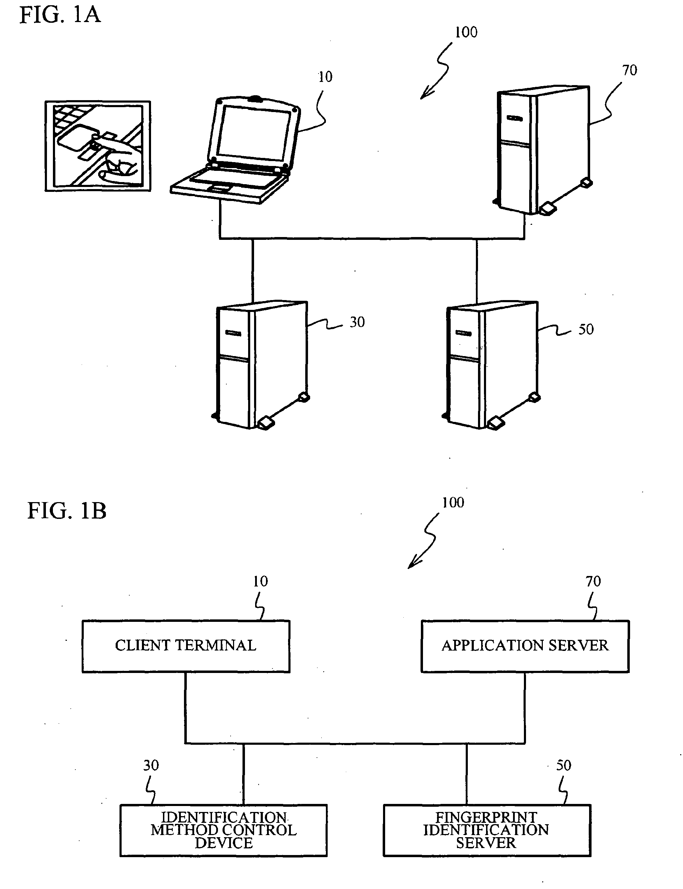

FIG 1A illustrates a schematic view of an identification system 100 including an identification method control device 30 in accordance with a first embodiment. FIG 1B illustrates a block diagram of the identification system 100. As illustrated in FIG 1A and FIG. 1B, the identification system 100 includes a client terminal 10, the identification method control device 30, a fingerprint identification server 50, and an application server 70.

The client terminal 10 has a biometric information input device. In the embodiment, the client terminal 10 has a fingerprint sensor as the biometric information input device. The fingerprint sensor is not limited specifically. For example, the fingerprint sensor has a sensing face where a finger of an individual is contacted. The client terminal 10, the identification method control device 30, the fingerprint identification server 50 and the application server 70 are coupled to each other via a network and may communicate with each other. The network may be a communication network such as public circuit, Internet, or an intranet.

Next, a description will be given of a schematic operation of the identification system 100. An individual puts a finger in touch with the fingerprint sensor of the client terminal 10 when the individual logs on the application server 70. The fingerprint sensor takes a fingerprint image, and converts the fingerprint image into a fingerprint data including a ridgeline and a valley line as a biometric data. The client terminal 10 transmits the fingerprint data to the fingerprint identification server 50. The fingerprint identification server 50 matches the received fingerprint data to a reference data of the individual stored in the fingerprint identification server 50 in advance. The fingerprint identification server 50 allows the login of the individual to the application server 70 if a similarity degree of the data equals to or more than a threshold based on the match result.

The fingerprint identification server 50 does not allow the login of the individual to the application server 70 if the similarity degree of the data is less than the threshold. The identification method control device 30 reduces the threshold if a given condition is satisfied. The action allows the login of the user to the application server 70.

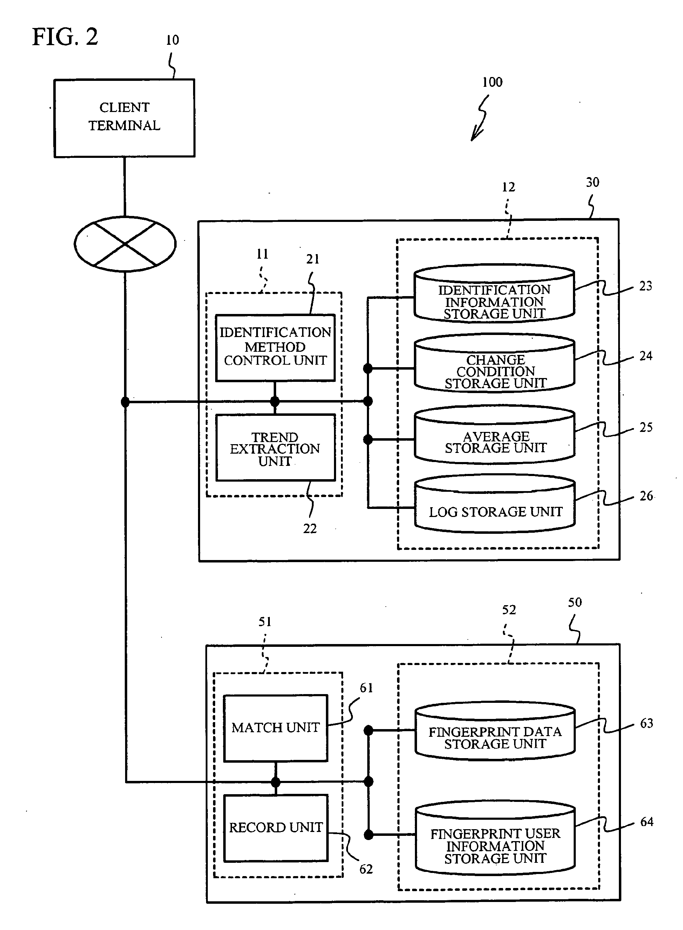

FIG 2 illustrates a block diagram of the identification system 100. As illustrated in FIG. 2, the identification method control device 30 has a Central Processing Unit (CPU) 11 and a storage unit 12. An identification method control unit 21 and a trend extraction unit 22 are generated when the CPU 11 executes an identification method control program for performing an identification method control method. A dedicated hardware may generate the identification method control unit 21 and the trend extraction unit 22. A computer may generate the identification method control unit 21 and the trend extraction unit 22. The storage unit 12 has a volatile memory and/or a nonvolatile memory. The storage unit 12 acts as an identification information storage unit 23, a change condition storage unit 24, an average storage unit 25, and a log storage unit 26.

The fingerprint identification server 50 has a CPU 51 and a storage unit 52. The CPU 51 generates a match unit 61 and a record unit 62 by executing a fingerprint identification program. A dedicated hardware or a computer may generate the match unit 61 and the record unit 62. The storage unit 52 has a volatile memory and/or a nonvolatile memory. The storage unit 52 acts as a fingerprint data storage unit 63 and a fingerprint use information storage unit 64.

Next, a description will be given of an operation of the identification system 100. The client terminal 10 gets a fingerprint data of a user as a reference data, with the fingerprint sensor. The record unit 62 gets the reference data from the client terminal 10. The fingerprint data storage unit 63 links the reference data to the user and stores the reference data. With the processes being repeated, the fingerprint data storage unit 63 stores the reference data of each user.

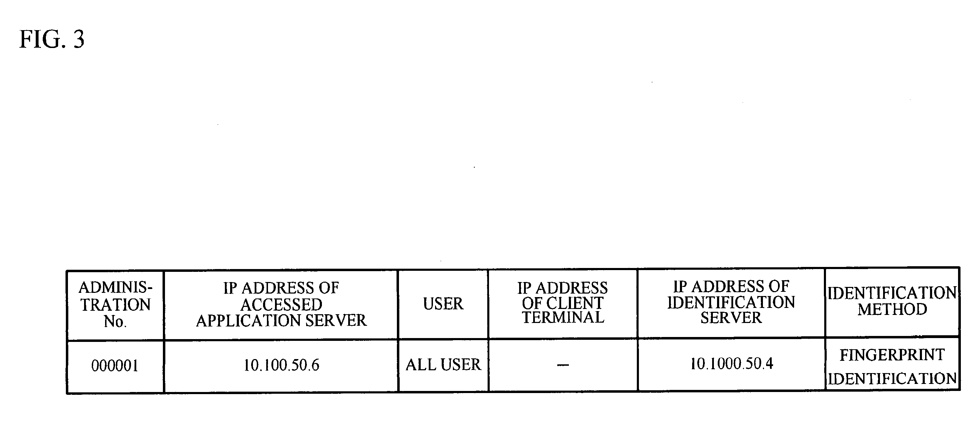

The client terminal 10 gets identification information illustrated in FIG. 3 from the identification information storage unit 23, when an individual logs on the application server 70. The identification information includes an identification method with respect to each user. The client terminal 10 displays an identification screen based on the identification information. In the embodiment, the client terminal 10 requires the individual to be identified with a fingerprint. The client terminal 10 gets a fingerprint data of the individual with the fingerprint sensor, and transmits the fingerprint data to the match unit 61.

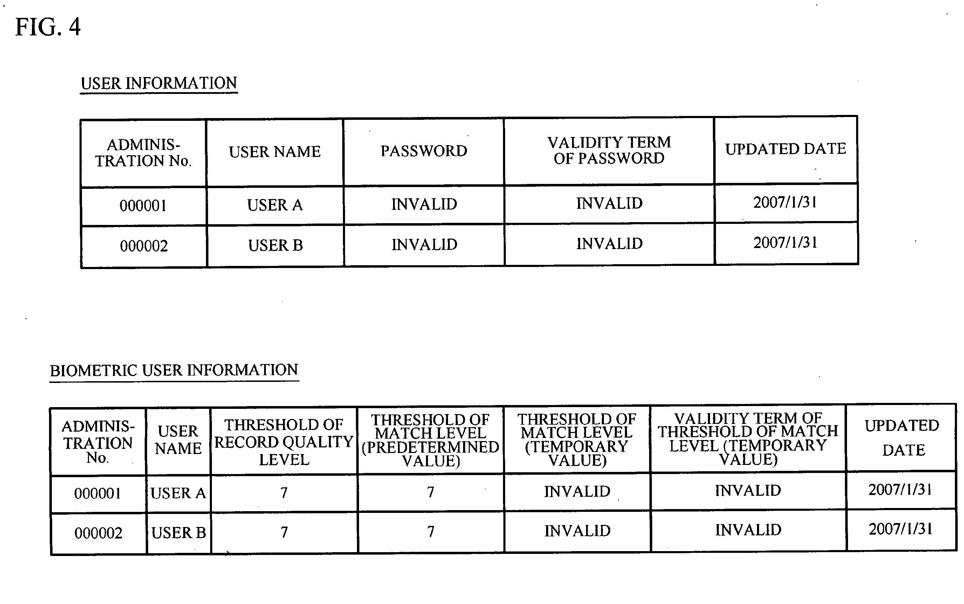

The match unit 61 gets user information and biometric user information illustrated in FIG. 4 from the fingerprint user information storage unit 64. The user information includes information whether password identification is invalid for the individual. The biometric user information includes a threshold of match level. The match level means a similarity degree between the reference data and the fingerprint data at identification. In the embodiment, the reference level is set to be 0 to 10. The threshold of match level is set to be 7. Therefore, a matching is succeeding if the similarity degree equals to or more than 7. And the matching is failure if the similarity degree is less than 7.

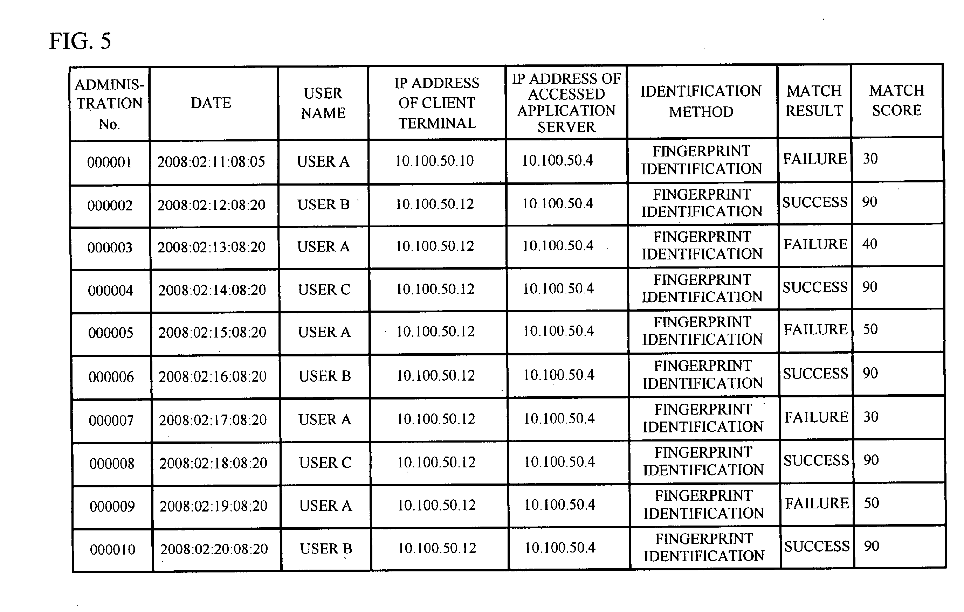

The match unit 61 determines whether the similarity degree between the reference data and the fingerprint data at identification equals to or more than the threshold. The log storage unit 26 stores the match result as log information. FIG. 5 illustrates the match result stored by the log storage unit 26. As illustrated in FIG 5, the match result of the individual is linked to an identification date. A match score in FIG 5 means a value reflected with the similarity degree between the fingerprint data for matching and the fingerprint data at identification. In the embodiment, the match score is set to be 0 to 100 according to the match level of 0 to 10.

In a case where humidity level is high in a season like summer or a case where humidity level is low in a season like winter, there is a case where biometric information such as fingerprint may not be captured accurately. For example, a finger may get moist in summer. The finger may be dried in winter. In these cases, quality of the reference data to be stored may be degraded. Thus, the similarity degree between the reference data and the fingerprint data at identification may be degraded. The similarity degree between the reference data and the fingerprint data at identification may be degraded when the individual logs on the application server 70, even if high quality reference data is stored.

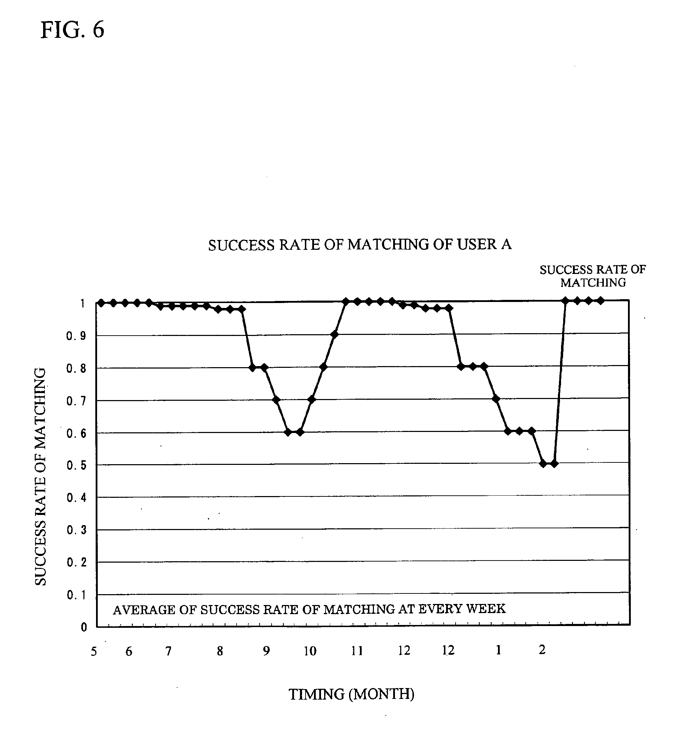

FIG. 6 illustrates an example of an average of success rate of matching according to time. FIG. 6 illustrates the success rate of matching of fingerprint identification. As illustrated in FIG. 6, the success rate of matching is reduced in summer and winter. It may be inconvenient for a user and convenience is degraded if the success rate of matching is reduced.

And so, in the embodiment, maintenance of security toughness is promoted with the convenience degradation being restrained, by changing the identification method dynamically.

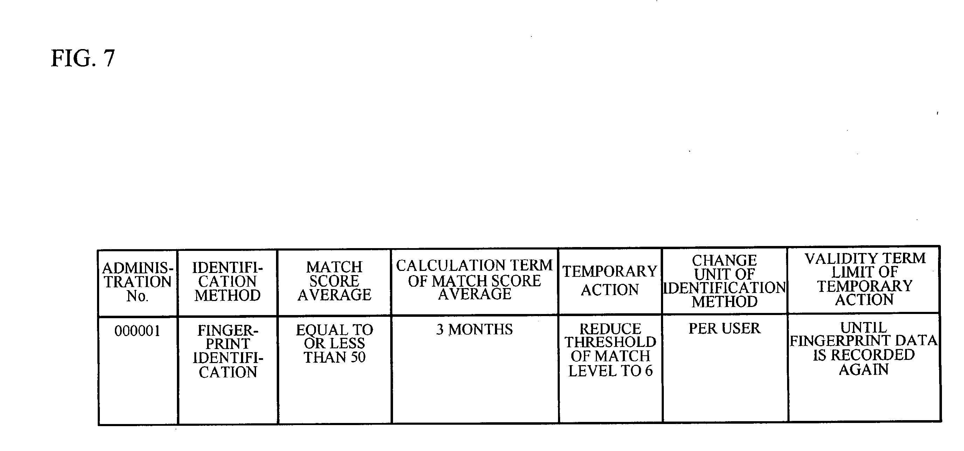

Next, a description will be given of an operation when the identification method is changed dynamically. The change condition storage unit 24 stores identification method change information illustrated in FIG. 7 in a table. The identification method change information includes a change condition during changing the identification method, a temporary action in a case where the change condition is satisfied, a validity term of the temporary action, and so on. In the embodiment, the threshold of match level is set to be 6 as the temporary action, if an average of match score of three months equals to or less than 50. The identification method change information may be set optionally.

The identification method control unit 21 refers to the identification method change information stored in the change condition storage unit 24, and directs the trend extraction unit 22 to extract log information. In the embodiment, the identification method control unit 21 directs the trend extraction unit 22 to extract the log information for three months of every user with the log information and calculate an average of the match score. In this case, the trend extraction unit 22 calculates the average of the match score based on the log information stored in the log storage unit 26.

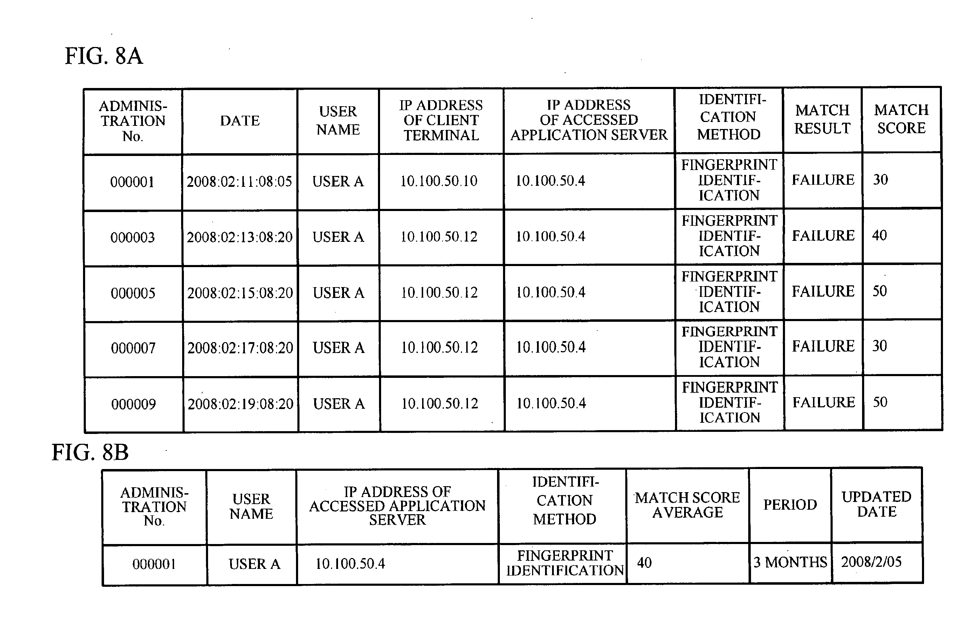

FIG 8A illustrates an example of extracted log information. Log information of user A is extracted as an example. FIG 8B illustrates an example of calculation result by the trend extraction unit 22. The trend extraction unit 22 lets the average storage unit 25 store the trend extraction result, and gives the trend extraction result to the identification method control unit 21. The identification method control unit 21 compares the change condition included in the identification method change information with the trend extraction result. The identification method control unit 21 updates the biometrics user information stored in the fingerprint user information storage unit 64, based on the temporary action illustrated in FIG 7.

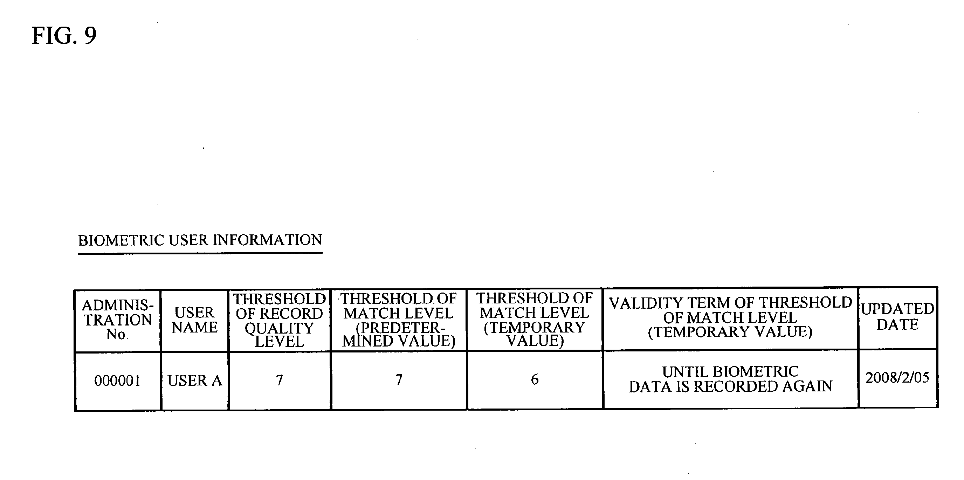

In concrete, the identification method control unit 21 reduces the threshold of the match level to 6 until the fingerprint data for matching is re-recorded, if the average of the match score equals to or less than 50. FIG. 9 illustrates an example of updated biometrics user information. The match unit 61 matches the fingerprint data based on the updated biometrics user information until the valid term limit. The match unit 61 matches the fingerprint data based on the biometrics user information before changing, after the valid term limit.

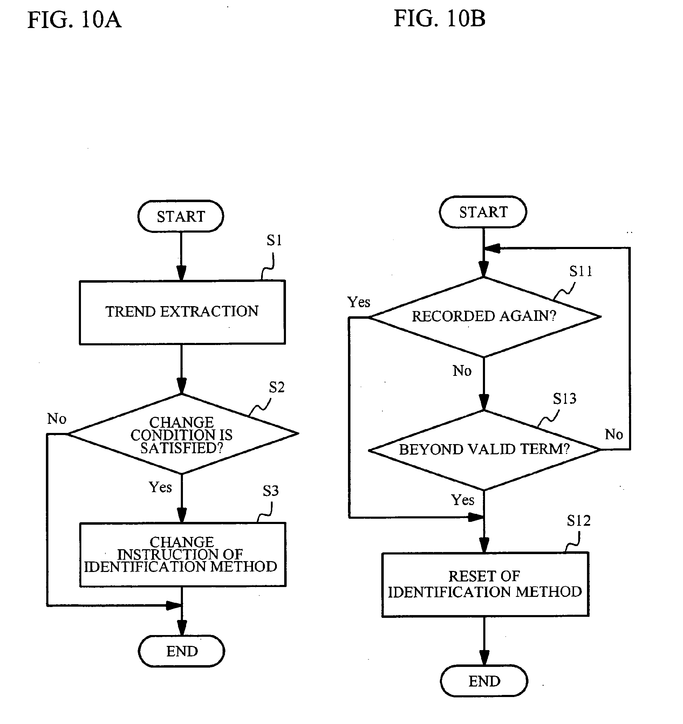

FIG. 10A illustrates an example of flowchart executed by the identification method control device 30 when the match unit 61 fails the matching. As illustrated in FIG. 10A, the identification method control unit 21 directs the trend extraction unit 22 to extract the trend of the log information of the individual (Step S1). Thus, the trend extraction unit 22 calculates the average of the match score for a given time.

Next, the identification method control unit 21 determines whether the average of the match score calculated in Step S 1 satisfies the change condition stored in the change condition storage unit 24 (Step S2).

If it is not determined that the average of the match score satisfies the change condition, the execution of the flowchart is finished. If it is determined that the average of the match score satisfies the change condition, the identification method control unit 21 directs the match unit 61 to update the identification method (Step S3). Thus, the biometrics user information is updated based on the temporary action stored in the change condition storage unit 24. After that, the execution of the flowchart is finished.

FIG. 10B illustrates an example of a flowchart in a case where the identification method is changed. As illustrated in FIG. 10B, the identification method control unit 21 determines whether a fingerprint data for matching is re-recorded (Step S11). If it is determined that the fingerprint data for matching is re-recorded, the identification method control unit 21 executes Step S12. After that, the execution of the flowchart is finished. If it is not determined that the fingerprint data for matching is re-recorded, the identification method control unit 21 executes Step S11 again.

In accordance with the embodiment, it is possible to avoid an accidental factor, because the identification method is changed with respect to every user based on the trends of the log information with respect to the same user. It is therefore possible to maintain the security toughness. And login is possible if a given condition is satisfied, even if the similarity degree at identification is low. It is therefore possible to restrain the degradation of convenience of user. And it is possible to improve the security toughness by setting the valid term.

There may be a method of setting identification method in system with respect to all users, a method of grouping a plurality of users and setting identification method in group, and so on. This is because workload is needed if a system administrator sets the identification method with respect to every user. The identification method may be administrated with respect to every user in a technology viewpoint if a structure design of database is readjusted. However, it may not be recommended that password identification be permanently allowed for only a specific user in a system using biometrics, in a security viewpoint. In contrast, the identification method is changed automatically within a range where the security toughness is maintained, in the embodiment. It is therefore possible to maintain the security toughness and restrain the degradation of convenience.

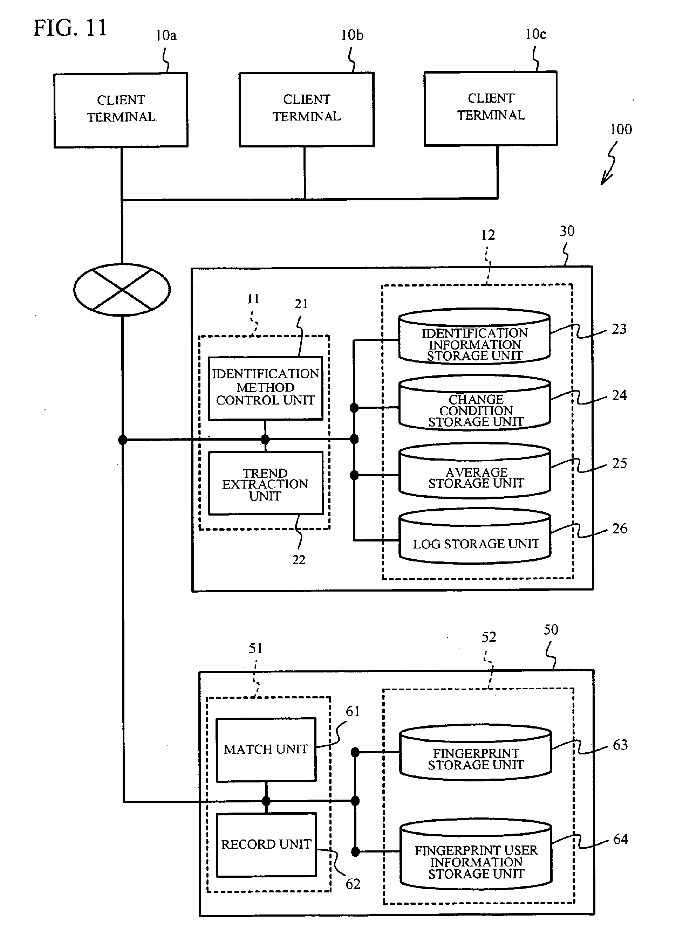

The identification system 100 may be adapted to a case where a user uses a plurality of client terminals. FIG. 11 illustrates an example where the identification method control device 30 and the fingerprint identification server 50 are coupled to a plurality of client terminals 10a through 10c. Each user can log in the application server 70 with of the clients terminals. In this case, a specific client terminal may tend to fail the match determination. For example, a version number of a program for the match determination may be low.

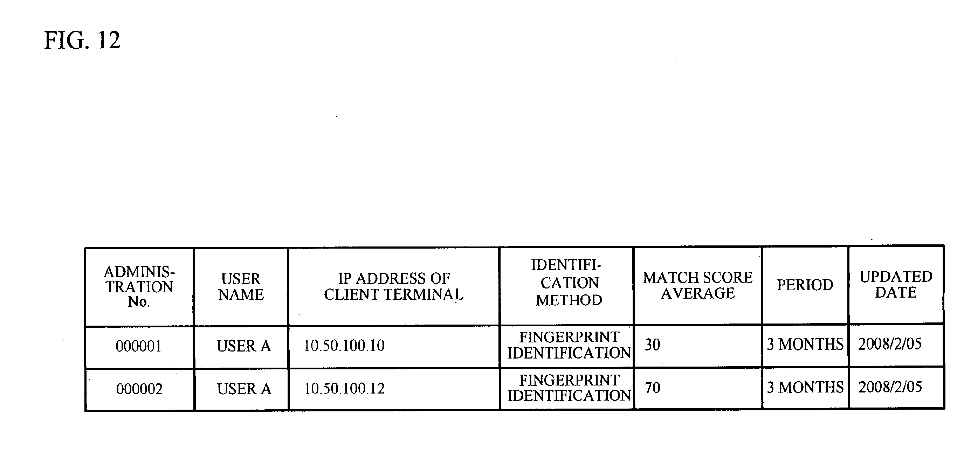

The trend extraction unit 22 may extract the average of the match score for a given term of an individual with respect to each client terminal. FIG 12 illustrates an example of the extraction result. The trend extraction unit 22 lets the average storage unit 25 store the trend extraction result and gives the trend extraction result to the identification method control unit 21. The identification method control unit 21 compares the change condition included in the identification method change information with the trend extraction result. The identification method control unit 21 updates the biometrics user information stored in the fingerprint user information storage unit 64 based on the temporary action of FIG. 7, if the trend extraction result satisfies the change condition.

With the embodiment, it is possible to maintain high security toughness of a client terminal having high average of match score. And it is possible to maintain the security toughness of a client terminal having low average of match score and restrain convenience degradation of user.

### [Second Embodiment]

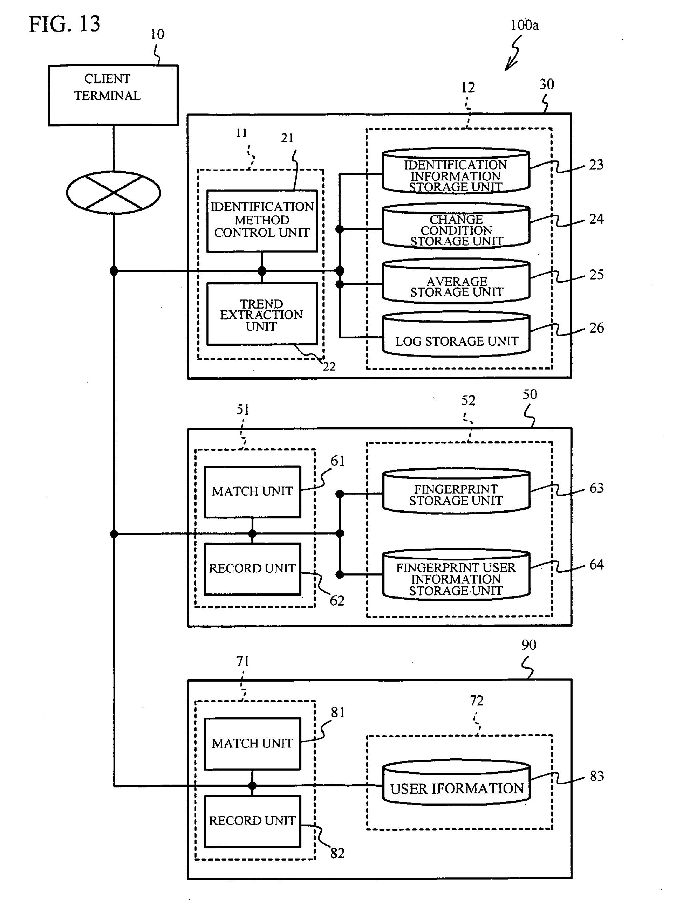

FIG 13 illustrates a block diagram of an identification system 100a in accordance with a second embodiment. The identification system 100a is different from the identification system 100 in accordance with the first embodiment in a point that an ID/PW identification server 90 is further provided. The ID/PW identification server 90 is a server for processing password identification.

As illustrated in FIG 13, the ID/PW identification server 90 has a CPU 71 and a storage unit 72. The CPU 71 executes an ID/PW program and generates a match unit 81 and a record unit 82. A dedicated hardware or a computer may generate the match unit 81 and the record unit 82. The storage unit 72 has a volatile memory and/or nonvolatile memory and acts as a user information storage unit 83.

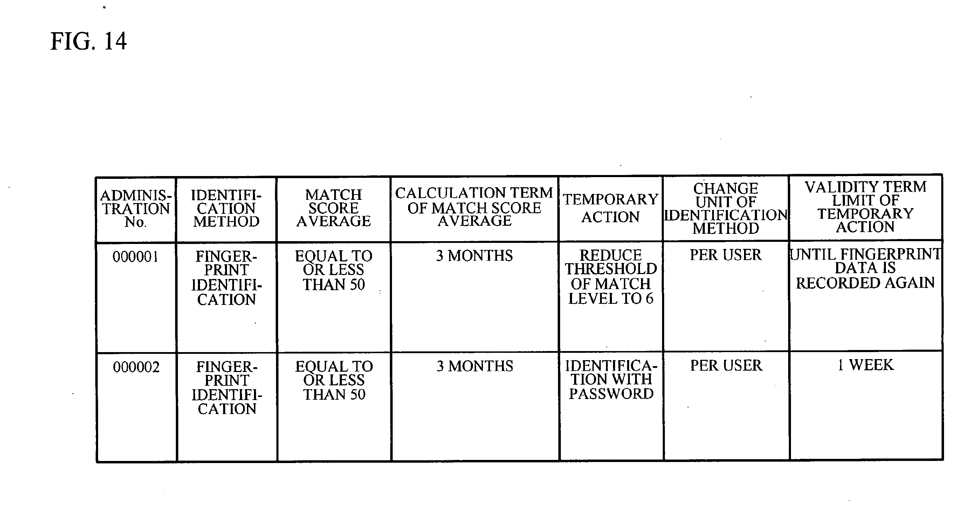

In the embodiment, the temporary action of changing the identification method includes password identification. For example, as illustrated in FIG. 14, the threshold of the match level is set to be 6, and the password identification is set.

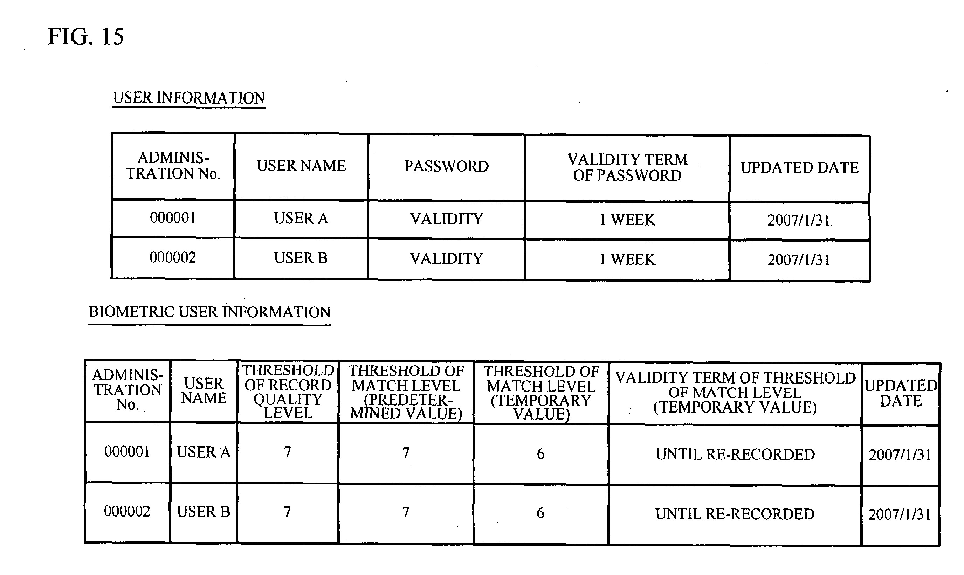

The identification method control unit 21 compares the change condition included in the identification method change information with the trend extraction result. The identification method control unit 21 updates the user information and the biometrics user information stored in the fingerprint user information storage unit 64, based on the temporary action of FIG. 14, if the trend extraction result satisfies the change condition. FIG. 15 illustrates the updated user information and biometrics user information.

In concrete, the identification method control unit 21 reduces the match level to 6 until the fingerprint data for matching is re-recorded with a user of which average of match score equals to or less than 50. The identification method control unit 21 allows the password identification with respect to the user.

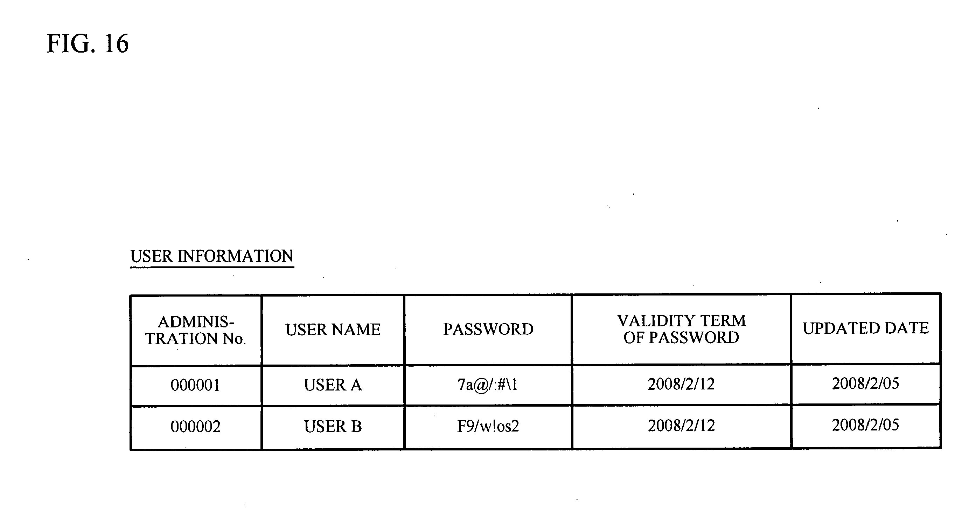

Next, the record unit 82 generates password for the user. The user information storage unit 83 stores the password as the user information. FIG. 16 illustrates the user information in this case. The record unit 82 transmits the password to the user or a system administrator with e-mail or the like. The system administrator may optionally set a password destination.

The match unit 61 matches the fingerprint data based on the updated biometrics user information until valid term limit of the threshold reduction. The match unit 81 requires an input of password via the client terminal, if the match unit 61 fails the match determination even if the threshold is reduced. The match unit 81 allows the login of the individual if input password corresponds to the password stored in the user information.

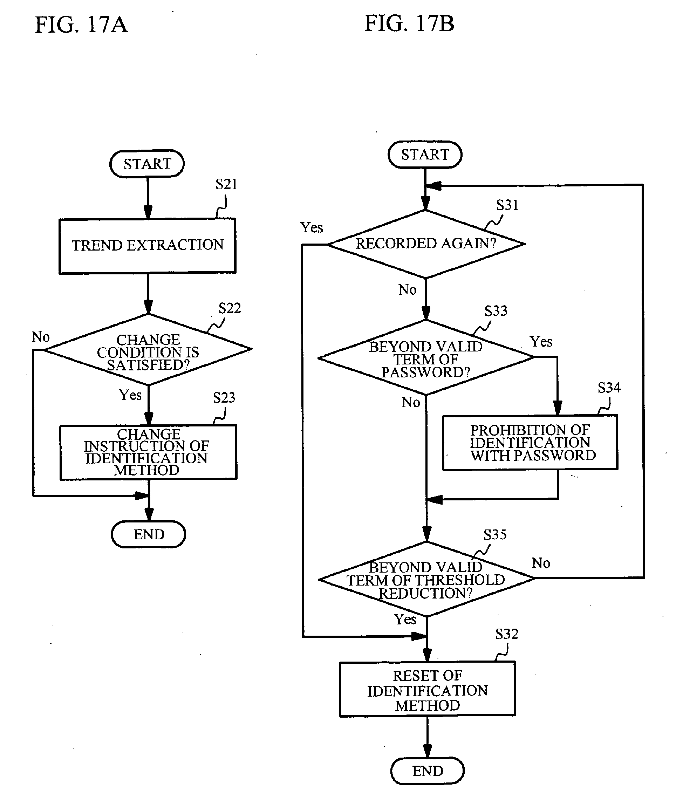

FIG. 17A illustrates an example of a flowchart executed by the identification method control device 30 when the match unit 61 fails the matching. As illustrated in FIG. 17A, the identification method control unit 21 directs the trend extraction unit 22 to extract trend of log information of an individual (Step S21). Thus, the trend extraction unit 22 calculates the average of the match score for a given time.

Next, the identification method control unit 21 determines whether the average of the match score calculated in Step S21 satisfies the change condition stored in the change condition storage unit 24 (Step S22).

If it is determined that the average of the match score does not satisfy the change condition in Step S22, the execution of the flowchart is finished. If it is determined that the average of the match score satisfies the change condition in Step S22, the identification method control unit 21 directs the match unit 61 to update the identification method (Step S23). Thus, the user information and the biometrics user information are updated, based on the temporary action stored in the change condition storage unit 24. After that, the execution of the flowchart is finished.

FIG. 17B illustrates an example of a flowchart in a case where the identification method is changed. As illustrated in FIG. 17B, the identification method control unit 21 determines whether the reference data is re-recorded (Step S31). If it is determined that the reference data is re-recorded in Step S31, the identification method control unit 21 directs the match unit 61 to reset the identification method (Step S32). After that, the execution of the flowchart is finished.

If it is not determined that the reference data is re-recorded in Step S 31, the identification method control unit 21 determines whether the valid term limit of the password is passed over (Step S33). If it is determined that the valid term limit is passed over in Step S33, the identification method control unit 21 directs the match unit 81 to update the user information so that the password identification is forbidden (Step S34).

Next, the identification method control unit 21 determines whether the valid term of the threshold reduction is passed over (Step S35). Step S35 is executed if it is not determined that the valid term is passed over in Step S33. If it is determined that the valid term is passed over in Step S35, the identification method control unit 21 executes Step S32. After that, the execution of the flowchart is finished. If it is not determined that the valid term limit is passed over in Step S35, the identification method control unit 21 executes Step S31 again.

In accordance with the embodiment, it is possible to avoid an accidental factor because the identification method is changed with respect to every user based on the trends of the log information with respect to the same user. It is therefore possible to maintain the security toughness. And login is possible if a given condition is satisfied, even if the similarity degree at identification is low. It is therefore possible to restrain the degradation of convenience of user. And it is possible to improve the security toughness by setting the valid term.

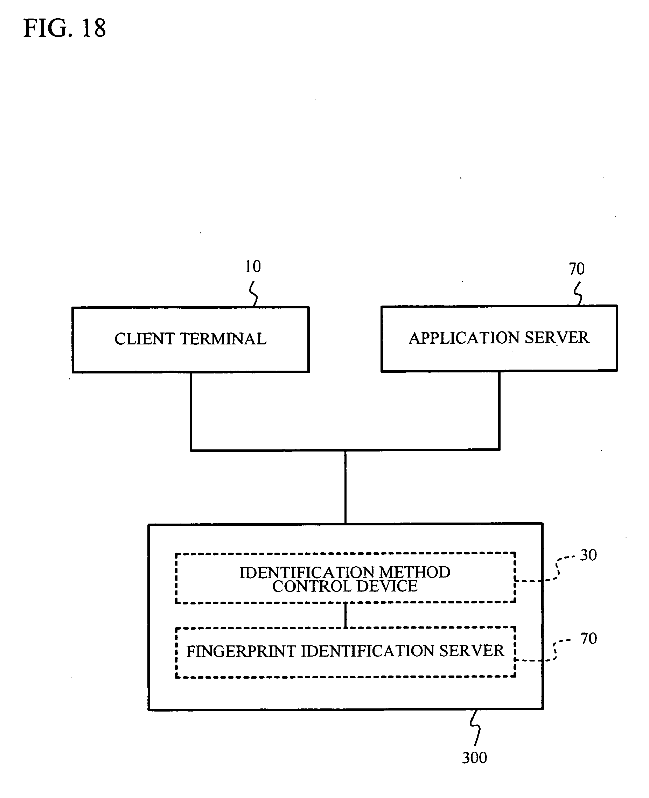

In the above-mentioned embodiments, the identification method control device 30 and the fingerprint identification server 50 are an independent server. However, the structure is not limited. As illustrated in FIG 18, a single server 300 may act as an identification method control device and a fingerprint identification server.

In the above-mentioned embodiments, fingerprint is used as biometric characteristics. However, the biometric characteristics are not limited to the fingerprint. For example, other biometric characteristics such as a palm of a hand, a voice pattern, or iris may be used as the biometric characteristics.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various change, substitutions, and alterations could be made hereto without departing from the spirit and scope of the invention.

## Claims

1. An identification method control device comprising:
a trend extraction unit that extracts a trend of a plurality of match information between a biometric data of an individual input by a biometric information input unit and a reference data of the individual stored in a storage unit; and
an identification method control unit that changes an identification method with respect to the individual based on an extraction result of the trend extraction unit.

2. The identification method control device as claimed in claim 1, wherein the match information includes identification information for identifying success of matching between the biometric data and the reference data.

3. The identification method control device as claimed in claim 2, wherein the matching is succeeding if a similarity degree between the biometric data and the reference data equals to or more than a threshold of matching.

4. The identification method control device as claimed in claim 3, wherein the identification method control unit reduces the threshold of matching based on the extraction result of the trend extraction unit.

5. The identification method control device as claimed in claim 3, wherein the trend extraction unit extracts a success rate of matching of the individual for a given time as the trend.

6. The identification method control device as claimed in claim 5, wherein the identification method control unit reduces the threshold of matching if the success rate of matching for the given time equals to or less that a given value.

7. The identification method control device as claimed in claim 1, wherein the trend extraction unit extracts the trend of match result of the individual per a terminal including the biometric information detection unit.

8. The identification method control device as claimed in claim 1, wherein the identification method control unit changes the identification method based on the extraction result of the trend extraction unit with respect to the individual to password identification.

9. An identification method control method comprising:
extracting a trend of a plurality of match information between a biometric data of an individual input by a biometric information input unit and a reference data of the individual stored in a storage unit; and
changing an identification method with respect to the individual based on an extraction result of the extracting of the trend.

10. The identification method control method as claimed in claim 9, wherein the match information includes identification information for identifying success of matching between the biometric data and the reference data.

11. The identification method control method as claimed in claim 10, wherein the matching is succeeding if a similarity degree between the biometric data and the reference data equals to or more than a threshold of matching.

12. The identification method control method as claimed in claim 11, wherein the changing of the identification method includes reducing the threshold of matching based on the extraction result of the extracting of the trend.

13. The identification method control method as claimed in claim 11, wherein the extracting of the trend includes extracting a success rate of matching of the individual for a given time as the trend.

14. The identification method control method as claimed in claim 13, wherein the changing of the identification method includes reducing the threshold of matching if the success rate of matching for the given time equals to or less than a given value.

15. The identification method control method as claimed in claim 9, wherein the extracting of the trend includes extracting the trend of match result of the individual per a terminal including a biometric information detection unit.
